(19) Europäisches Patentamt
European Patent Office
Office européen des brevets

(11) **EP 1 976 101 A2**

(12) **EUROPEAN PATENT APPLICATION**

(43) Date of publication:
**01.10.2008 Bulletin 2008/40**

(51) Int Cl.:
*H02K 15/02* (2006.01)   *H02K 1/06* (2006.01)
*H02K 17/16* (2006.01)   *H02K 1/16* (2006.01)
*H02K 1/26* (2006.01)    *H02K 1/16* (2006.01)
*H02K 1/26* (2006.01)

(21) Application number: **08002306.2**

(22) Date of filing: **07.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **28.03.2007 JP 2007083250**

(71) Applicant: **Hitachi, Ltd.**
**Chiyoda-ku**
**Tokyo 100-8280 (JP)**

(72) Inventors:
• **Nishihama, Kazuo**
**Chiyoda-ku**
**Tokyo 100-8220 (JP)**

• **Abe, Teruyoshi**
**Chiyoda-ku**
**Tokyo 100-8220 (JP)**
• **Ishikawa, Yoshihisa**
**Chiyoda-ku**
**Tokyo 100-8220 (JP)**
• **Mikami, Hiroyuki**
**Chiyoda-ku**
**Tokyo 100-8220 (JP)**

(74) Representative: **Kirschner, Klaus Dieter**
**Puschmann & Borchert**
**Partnerschaft**
**Postfach 10 12 31**
**80086 München (DE)**

(54) **Induction machine with etched lamination sheets**

(57) An induction machine has a stator and rotor. The stator comprises teeth and slots and stator winding disposed in the slots. The rotor comprises a rotor core having teeth and slots and a rotor-conductor disposed in the rotor slots. Both of the stator core and rotor core are made of laminated steel sheets, and the teeth and slots made of steel sheets are formed by etching.

## FIG. 6

(a)   WORKED SECTIONAL FACE   (b) CONVEX TYPE   (c) CONCAVE TYPE

STEEL SHEET THICKNESS

VERTICAL DIRECTION

HORIZONTAL DIRECTION

NON-SHEAR DROP BURRS, AND CRUSHING

(d) V-SHAPED TYPE

EP 1 976 101 A2

**Description**

In connection with a problem on global warming, induction machines are also required to have high efficiency in view of energy conservation. To reduce iron loss of the induction machine, there is a technique that an electric insulation layer is arranged on iron cores. For example, ordinary induction machines are disclosed in Japanese laid open patent publications Sho-55-26040, Sho-56-83252, Hei-03-207228 and Sho-53-98011. Here, any of these disclose air filled holes and slits acting as the electric insulation layer.

The induction machine requires high efficiency. With respect to the high efficiency of the induction machine, decreasing of the iron loss is quite necessary. Here, the iron loss is shown as addition of hysteresis loss and eddy current loss. The hysteresis loss is a loss when a direction of the magnetic domain of the iron core is changed by the alternating magnetic field, and depends on the area inside of a hysteresis curve. A stator core and a rotor core of an induction machine are formed with a magnetic circuit laminating magnetic steel sheets to decrease the eddy current loss.

The stator core and rotor core have a complicated shape and both of them are manufactured by punching. When punching, problems occur that the crystal structure of the sheared portion of the magnetic steel sheets deforms and deteriorates their magnetic property. The interior area of the hysteresis curve becomes large and the iron loss increases considerably.

Additionally, thick magnetic steel sheets have a disadvantage that makes eddy current loss large. Therefore, there is a problem not to improve the efficiency of the induction machine. Also, while a gap between the stator core and rotor core is necessary to be small as well as high precision, the insufficient precision of the punching is not able to decrease the high harmonic iron loss.

An object of the present invention is to provide an induction machine appropriate to reduce iron loss and realize high efficiency.

One aspect of an induction machine having a stator and rotor in accordance with the present invention lies in that its stator core and rotor core are made of laminated steel sheets formed by etching. Preferred embodiments of the invention are characterized in the subclaims.

Embodiments of the invention are now described with reference to the drawings.

Fig. 1 a view showing a structure of an induction motor of an embodiment in accordance with the present invention;
Fig. 2 is a sectional view showing an example of an induction motor core part;
Fig. 3 is an example view showing the core part of the induction motor, cross-section partially enlarged;
Fig.4 is a view showing the relationship between the thickness of the magnetic steel sheet and the iron loss;
Fig.5 is a view showing the relationship between the content of the silicon in the silicon steel sheet;
Fig. 6 is a view showing worked section shape by a typical etching;
Fig. 7 is a view showing a typical worked section shape by the punching;
Fig. 8 is a view showing an important part of the induction motor relating to the embodiments 2 to 8 in accordance with the present invention; and
Fig. 9 is a view showing the main part of the induction motor related to the embodiments 9 and 10 in accordance with the present invention.

Now, embodiments in accordance with the present invention are explained referring to the following attached drawings.

Embodiment 1

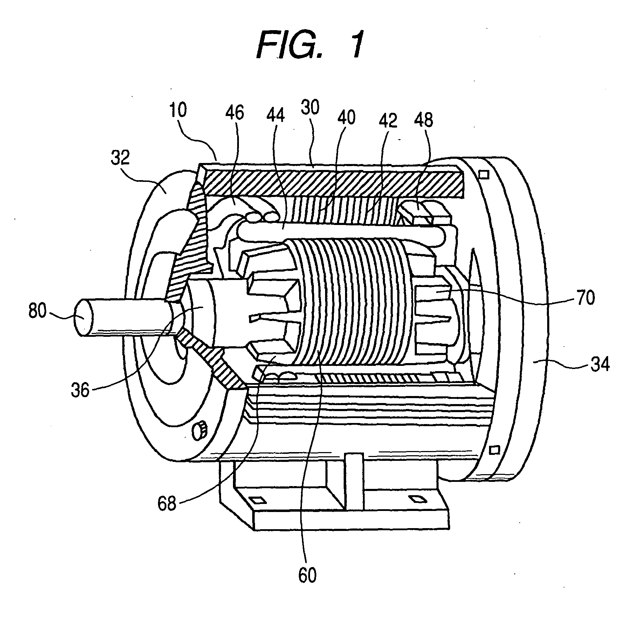

Fig.1 shows a structure of a three-phase induction motor using magnetic steel sheets. The induction motor 10 comprises a housing 30, an end bracket 32, a fan cover 34 including a fan in the inside, a stator 40 fixed on the inside of the housing 30, a rotor 60 installed into a stator 40 and a shaft 80 supporting the rotor 60. The shaft 80 is held rotatably to both sides of the end bracket 32 by a bearing 36.

Also, a fan covered by the fan cover 34 is attached to the shaft 80 and the fan rotates according to the rotation of the shaft 80. The end bracket 32 of the fan, the bearing 36 and the fan are positioned on the inside of the fan cover 34 and these are not shown in Fig. 1.

The stator 40 is comprised of a stator core 42, a multi-phase, for example, a three-phase stator winding 44 wounded on the stator core 42 in the embodiment. An AC current is supplied through a lead wire 46 to the stator winding 44 from an AC terminal (not shown). The stator winding 44 is connected as star connection or delta connection by a connection 48. The lead wire 46 and connection 48 are arranged outside of the stator winding 44, respectively.

The three phase alternate current is supplied to the AC terminal of the induction motor 10 from the external power source and the stator 40 generates a rotation magnetic field based on the AC current frequency by supplying the AC current through the lead wire 46 to the stator winding 44. The rotation magnetic field induces the rotor current through conductors of the rotor 60 and rotating torque is produced by the reaction between the rotor current and the rotation magnetic filed.

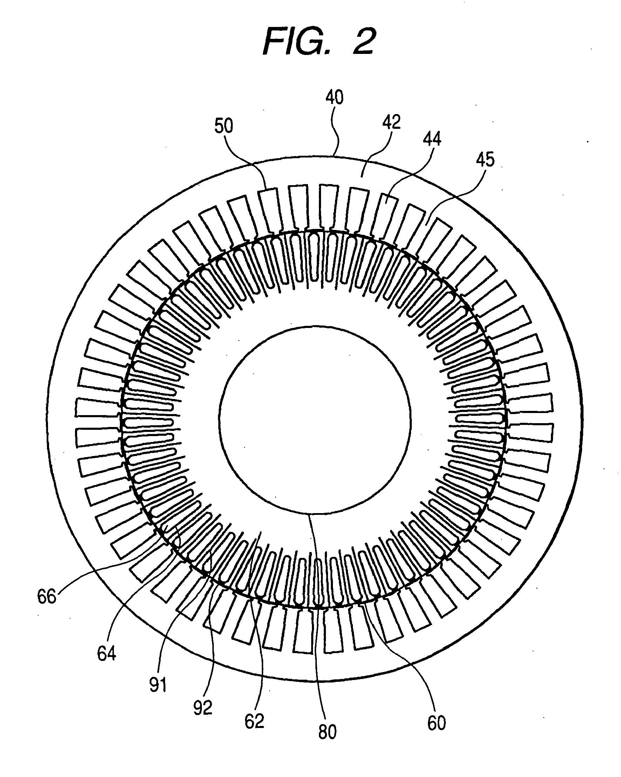

Fig. 2 shows a cross sectional view of the stator 40 and rotor 60 in Fig. 1 taken along a sectional plane perpendicular to the rotating shaft.

The stator 40 has a plurality of stator slots 50 and stator teeth 45 arranged with equal pitches in the circumferential direction, respectively, and the stator winding 44 is arranged in the stator slots 50.

The rotor 60 comprises a rotor core 62 by laminated silicon steel sheets, a plurality of rotor slots 64 and rotor teeth 67 on the rotor core 62 with equal pitches in the circumferential direction, respectively, the rotor-conductors 66 inserted into the rotor slots 64 respectively, short circuit rings 68 and 70 disposed both sides of the rotor core 62 to electrically short-circuit the rotor-conductors to each other, slits 91 disposed to prevent the rotor core 62 from electrically being short-circuited by the rotor-conductor 66, and groups of small many holes 92 which are located at portions where leakage magnetic flux flows through to be essentially reluctance.

The rotor-conductors 66 may be structured by conductive material, for example, the material containing mainly copper, and are inserted to the inside of the rotor slots 64 and may be short-circuited together at both sides by short-circuit rings. The rotor-conductors and short-circuit rings are formed by aluminum die cast method.

The aluminum die casting method is to form the rotor-conductors 66 inside the rotor slots 64, the short-circuit rings 68 and 70 at the same time by setting the laminated rotor core 62 into a die and flowing molten aluminum into the die. In the induction motor without the slits 91, as the rotor core 62 electrically short-circuits the rotor-conductor 66 and current flows through the rotor core 62, the iron loss is produced. Additionally, in the induction motor without groups of the small holes 92, the leakage magnetic flux flows through the opening portion of the groups and results in preventing the efficiency improvement.

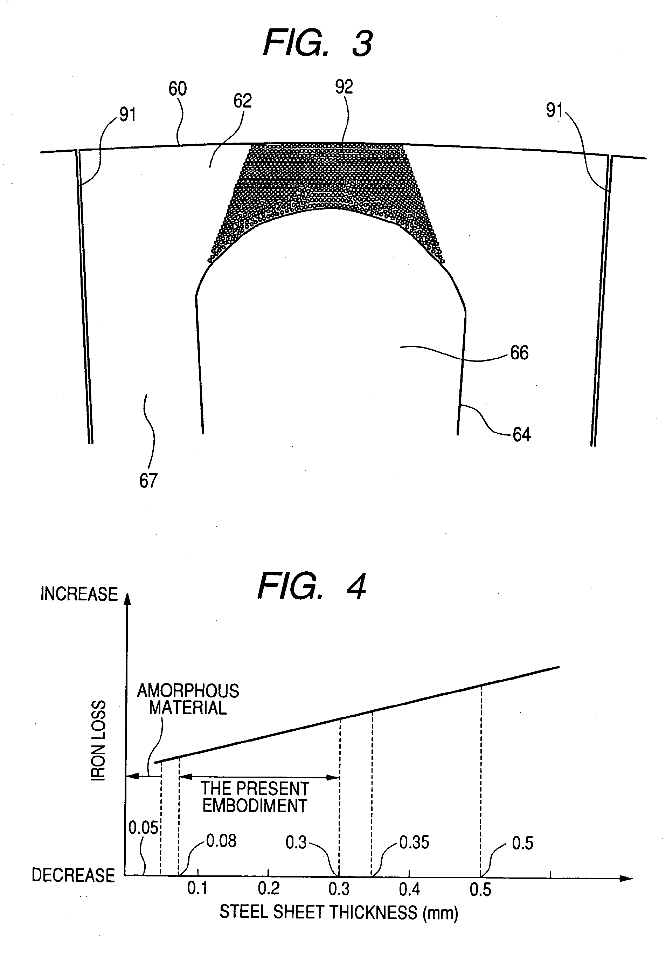

Fig. 3 shows an enlarged view of the slits 91 and one of the groups of holes 92 shown in Fig. 2. In the present embodiment, the width of the slits 91 is set smaller than the thickness of the steel sheet of the rotor core 62. In the present embodiment, the thickness of the steel sheet of the rotor core 62 is 0.05 to 0.30mm and very thin compared with the conventional thick magnetic steel sheet.

Accordingly, it is easy to be bent because of having not large hardness such as amorphous material. By lessening the width of the slit 91 compared with the thickness of the rotor core 62, the trouble that steel sheets are inserted and bent in the slits 91 may be suppressed within a minimum limit in assembling and working.

Also, if the width of the slits 91 is large, the width of the rotor teeth 67 becomes small and the reluctance of the rotor teeth 67 increases to prevent efficiency improvement. Therefore, the small width of the slits 91 is desirable. In the induction motor without the slits 91, the rotor core 62 short-circuits electrically the rotor-conductor 66 and current flows through the rotor core 62 and causes the iron loss.

In the present embodiment, the slits interrupt this current to suppress the iron loss. Because electric resistance value of the slits 91 is able to be set at infinite large to use a material such as air or the like having very high resistance and even if the width of the slits 91 is lesser, the effect to suppress the iron loss is maintained. When getting large width of the slit 91, the magnetic gap distance between the stator core 42 and rotor core 62 becomes large and therefore, the width of the slit91 is preferably small from a viewpoint of improvement of the efficiency.

The diameter of each hole of the group is smaller than the thickness of the steel sheet of the rotor core 62. While the present embodiment arranges the holes 92 of each group at uniform interval, uneven interval of the holes may be available. For example, the holes may be arranged so as to be hard to pass the flux the rotation magnetic field through a circumferential direction of the rotor and easy to pass the flux through a radial direction thereof. In the present embodiment, while the diameter of each hole 92 of the group 92 is equal, there is no need to coincide each other.

In the present embodiment, the shape of each hole 92 of the group 2 is circular, however, any shape such as ellipse or rectangular is available. In the case of making conductors and short-circuit rings by the aluminum die casting method, a small width of each slit 91 and a small diameter of each hole 92 is preferable to prevent molten aluminum from flowing into the slit 91 and the hole 92.

The number of the stator slots 50 in the present embodiment is "48" and the number of its rotor slot 64 is "60". The width of the magnetic gap between the stator core 42 and rotor core 62 is relatively large at the position where the stator slots 50 exists and is relatively small at the position where the stator teeth 45 exist. At the position of a large width of the magnetic gap, the reluctance is large and the magnetic flux is small. At the position of a small width of the magnetic gap, the reluctance is small and the magnetic flux is large.

By rotation of the rotor 60, magnetic flux of the rotor core 62 changes with time lapse and the eddy current flows through the surface of the rotor core 62 with distribution corresponding to the number of stator slots 50 and as a result, the iron loss (hereinafter also referred to as surface loss) is produced on the outer peripheral surface of the rotor core 62.

The stator slots 50 are arranged for 360°/48 = 7.5° and the eddy current flowing through the outer peripheral surface of the rotor core are to be distributed for 7.5°. The surface loss becomes maximum at a position where the eddy current becomes maximum in a positive direction and negative, the surface loss is distributed for 3.75°. Therefore, provided spacing between adjacent slits 91 is less than 7.5° pitch, preferably less than 3.75° pitch, the surface loss can be reduced.

In the present embodiment, the slit 91 are arranged for 360°/60 = 6.0° pitch. In the present embodiment, only one slit 91 per rotor tooth 67 although is arranged, two or more slits per rotor tooth also can be arranged. Thus, provided the number of the slits per rotor tooth is increased, the spacing between adjacent the slits 91 becomes less than 3.75° pitch, and it is possible to further reduce the surface loss and improve the efficiency of the induction machine.

While in the present embodiment, the number of stator slots 50 is "48" and that of rotor slots 64 are "60", the number of the slots is not limited and its effect is expectable. In addition to the induction motor, whole rotating machines having the stator slots 50 are able to reduce the surface loss by arranging the slits 91.

According to the present embodiment, it is possible to manufacture desired shapes of the stator core 40 and rotor core 60 with very high accuracy, for example, less than $\pm 10 \mu$m as an error, preferably less than $\pm 5 \mu$m as error, by forming the shapes of the stator core 40 and rotor core 60 with the etching. Therefore, even if the thickness of the magnetic steel sheet of the rotor core is 0.05 to 0.30mm, it is possible to form slits 91 with the width smaller than the thickness of the magnetic steel sheet and form holes 92 with the diameter smaller than the thickness.

In addition to the etching, advantages of the present embodiment may be accomplished by a working way such as lazar working.

The slits 91 and the holes 92 of the groups are filled with air in the present embodiment. Instead of them, the slits 91 and the holes 92 may be filled with resin.

Additionally, the present embodiment is applied to an induction motor. However, even if the slits 91 and the holes 92 are applied to other rotating electrical machine, effects of decreasing the iron loss such as the surface loss and leakage magnetic flux may be expected.

Here, the magnetic steel sheets of the stator core and rotor core formed by etching in accordance with the present invention is explained.

The stator core and rotor core (hereinafter referred to as "core") are made of laminated steel sheets. Salient poles of the steel sheets are formed with the etching, preferably photo etching. At this time, thickness of each steel sheet of them is 0.08 to 0.30 mm.

Off course, provided the whole shapes of silicon steel sheets of the stator core and the rotor core are formed by the etching, it is desirable from viewpoints of the magnetic property and workability of manufacturing process.

The rotor core is formed by a laminate of 0.08 to 0.30 mm- silicon steel sheets as well as the stator core. Incidentally, if the steel sheets of the stator core or the rotor core are formed by punching, the punching cause the failure of a regular crystal arrangement in each of the steel sheets and accordingly, hysteresis loss of the core increases. On the other hand, the etching for forming the stator core and rotor core enable to prevent the failure of a regular crystal arrangement and increase of hysteresis loss.

In the case of the punching, the more the steel sheet as working object becomes thin, the more disorder of the section portion such as crashing, burr, droop causes became large and the hysteresis loss is tendency to be increased.

In addition, workable shape by the punching is limited to a simple shape such as circle or straight line. Because the punching requires a die and it is very difficult to form the die with complicated curve. In addition, in the case of polishing the die, particularly, the die with complicated curved shape, a problem occurs that it is impossible to polish the die sufficiently.

Accordingly, in the machining such as punching, it although may thin the magnetic steel sheet down to decrease the eddy current loss, it results in increasing hysteresis loss, and accordingly it is difficult to suppress the iron loss.

The etching can solve such problems. The hysteresis loss is suppressed to low value by the etching and the eddy current loss is reduced. In the induction machine, the rotor core efficiency of the whole of the induction machine can be further improved by the etching. Additionally, photo etching is available as a typical etching method.

According to the etching for the steel sheets, in addition to decreasing of hysteresis loss by preventing the failure of the regular crystal arrangement in the steel sheets, the etching is expected to improve characteristic of the induction machine by considerable improving the working accuracy.

Also, forming width of a magnetic gap with high accuracy is capable of improving characteristic and efficiency of the induction machine through reduction of high harmonic magnetic flux, reduction of reluctance and magnetic flux leakage.

Furthermore, enabling to form the stator core and rotor core with complicated curving shape, results in improving of the characteristic and performance of the induction motor compared with punching.

For example, forming precisely a gap shape between the stator core and the rotor core enables not only improving efficiency but also reducing pulsation as well as improving characteristic.

The present invention is concretely explained in the following embodiment below. In the embodiment, laminated core density of the core is 90.0 to 99.9 %, preferably 93.0 to 99.9 %. Here, the laminated core density is defined by the following equation.

$$\text{Laminated core density (\%)} = \text{steel thickness (mm)} \times \text{the number of sheets}$$
$$\div \text{core height (mm)} \times 100$$

Additionally, this laminated core density is not always impossible to be improved by compressing mechanically the laminated core. However, in such a case, increasing of the iron loss is not preferable. According to the present embodiment, the laminated core density is improved without a special process.

Such improvement of the laminated core density enables reduction of magnetic flux density in the core, and as a result, the iron loss of the induction machine may be reduced.

In the above case, the thickness of the steel sheets is 0.08 to 0.30 mm, the number of core is 20 to 100 (sheets) and the height of the core is 5 to 20 mm. Therefore, the laminated core density (%) is 32 to 150 %.

The components of the steel sheets are 0.001 to 0.060 wt% carbon, 0.1 to 0.6 wt% manganese, less than 0.03 wt% phosphorus, less than 0.03 by weight % sulfur, less than 0.1 by weight % chromium, less than 0.8 wt% aluminum, 0.5 to 7.0 wt% silicon, and 0.01 to 0.20 wt% copper, and a balance iron with inevitable impurities. Additionally, the inevitable impurities are gases such as oxygen, nitrogen and the like.

Preferable constituents of the steel sheet are 0.002 to 0.020wt% carbon, 0.1 to 0.3wt% manganese, less than 0.02 wt% phosphorus, less than 0.02 wt% sulfur, less than 0.05 wt% chromium, less than 0.5 wt% aluminum, 0.8 to 6.5 wt% silicon, 0.01 to 0.1 wt% copper and a balance iron with inevitable impurities. It is the silicon steel sheets with crystal particles, so called as magnetic steel sheets.

When determining composition of such silicon steel sheets, in particular, content of silicon and aluminum is important from a viewpoint of decreasing the iron loss. When defining Al/Si based on this viewpoint, this ratio is preferably 0.01 to 0.60. More preferable ratio is 0.01 to 0.20.

Additionally, with respect to the silicon concentration of the silicon steel sheet, the induction machines using 0.8 to 2.0 wt% and the induction machines using 4.5 to 6.5 wt% are used properly according to kind of induction machines.

Magnetic flux density of the silicon steel sheet improves by decreasing the content of silicon. The present embodiment enables to set at 1.8 to 2.2 T.

In the case of small content of silicon, the rolling workability is improved to thin the thickness, and lessening the thickness reduces the iron loss, too. On the other hand, in the case of large content of silicon, the reduction of the rolling workability is solved by a devise to contain the silicon after the rolling working, the iron loss is also reduced.

Additionally, silicon distribution contained in the silicon steel sheet may be diffused approximately uniformly in the direction of the silicon steel sheet thickness. Further, concentration of surface portion of the silicon steel thickness is set at high compared with the inner concentration so as to be partially high silicon concentration in a direction of the thickness of silicon steel sheets.

Furthermore, the core has an insulation film with the thickness of 0.01 to 0.2µm between the laminated steel sheets. The induction machine has a insulation film with thickness of 0.1 to 0.2µm, preferably 0.12 to 0.18µm and another one has the thickness of 0.01 to 0.05µm, preferably 0.02 to 0.04µm.

Additionally, when the thickness of the insulation film is 0.1 to 0.2µm, the insulation film preferably uses the organic or inorganic materials. The organic, inorganic or hybrid material combined of these may be used as the insulation film material.

When thickness of insulation film is 0.01 to 0.05µm, the insulation film is preferably an oxide film. In particular, an iron series oxide is desirable. Namely, by thinning the thickness of the silicon steel sheets, the thickness of insulation film becomes thin, too.

The traditional insulation film requires thickness of about 0.3µm for the following reason. In order that the magnetic steel sheet maintains the insulating property after punching and simultaneously punching property itself is improved, the insulation film is also required to have factors other than the insulation property. The factors are lubricant of the film, adhesion property between adjacent magnetic steel sheets, thermal resistance property in annealing after punching, welding property when welding laminated magnetic steel sheets to form cores or the like. The components and thickness of the insulation film are taken in consideration by those factors, the resulting is the above-mentioned the insulation film's thickness of about 0.3 µm.

However, thinned silicon steel sheets explained in the present embodiment require lessening the thickness of the insulation film.

If using the same thickness of insulation film as tradition, a volume fraction of the insulation films relatively increases to that of the silicon steel sheets by thinning the silicon steel sheets. Consequently, magnetic flux density is provably decreased.

On the other hand, the thinned silicon steel sheet explained in the present embodiment can decrease the thickness of the insulation film.

In general, when thinning magnetic steel sheets, the insulation films are needed to be thickened. However, the present embodiment is different from such thought, namely, even when the magnetic steel sheets are thinned, there is no need to thicken the insulation films and preferably, the insulation films are thinned together with the magnetic steel sheets. As a result, the laminated core density is improved.

And also, the silicon content should be determined by taking in account of the disperse condition of the silicon in the silicon steel sheet and the applied condition of the rotor. Namely, for example, the induction motor rotors may be applied under the following cases: one is a case where the motor is used in low maximum rotation speed operation region and silicon contained in the steel sheet is dispersed in a direction of the thickness; and another is a case where the motor is used high speed operation region such as several thousands rpm to several ten thousands rpm and the silicon concentration on the outside of the steel sheet is higher than that of the inside. Therefore, the silicon content of the steel sheet is determined taking in account of these cases.

The relationship between rotation speed and the iron loss is that the more the rotation speed goes up, the more the alternating frequency of the magnetic flux becomes high and the iron loss increases. The iron loss of the high-speed rotation induction motor is tendency to increase in comparison with the low rotation speed one. Considering this point, the content of silicon in the silicon steel sheets is necessary for examination.

The silicon contained in the silicon steel sheets may be added uniformly to the magnetic steel sheets by a melting method or partially add to the magnetic steel sheet, especially at its surface portion by surface reforming, ion injection, CVD (chemical vapor deposition) or the like.

The magnetic steel sheet in the embodiment present is premised on using core having salient poles and a yoke of a stator in the induction machine. The thickness is 0.08 to 0.30 mm and the salient poles and the yoke are formed by etching.

The etching of the magnetic steel sheets with width of 50 to 200cm is performed through coating the steel sheet by resist, exposing and developing a pattern corresponding to a shape of the rotor core, removing the resist based on this pattern, etching it by etching fluid, and removing the residual resist after working by the etching fluid.

It has been believed that the thinning of the silicon steel having an advantage of low iron loss is impossible to be carried out without increasing greatly its cost in the industrial scale due to its insufficient rolling workability and bad punching property in the process of punching the core. When applying it to the high efficiency induction machine as the magnetic steel sheet, its thickness is mainly 0.50 mm and 0.35 mm, and the thinning of the silicon steel have not been advanced for a long time.

However, the present embodiment enables to make thin silicon steel sheets for the core and realizes low iron loss by using etching in place of punching without increasing a quite large cost in large scale.

The present embodiment considers using the silicon steel sheet with the low iron loss and adjusting the content of silicon considering rolling working, thinning of the thickness of silicon steel sheet considering rolling working. Further, it considers application of etching for forming the shape of the core, reduction of the iron loss of each silicon steel sheet structuring laminated core and an insulation film formed between the adjacent silicon steel sheets to realize the low iron loss of the core.

In the punching which is a punching working method using a die, working hardness layer and a plastic deformation layer such as burrs and droops (hereinafter referred to as burrs or the like) are produced in the vicinity of a section portion, and residual strain and stress are generated therein. The residual stress being caused at punching make the failure of regularity of arrangement of molecule magnets, namely make the failure of magnetic domain. Accordingly the iron loss is considerably increased, and an annealing process is required to remove the residue stress. The annealing process results increases further manufacturing cost of the core.

Since the present embodiment can form the core without performing such punching, forming of the plastic deformation layer and generation of the residual strain and stress are suppressed. Accordingly, arrangement of the crystal particles is not made into the failure and it is possible to prevent the failure of the arrangement of the molecular magnets, namely, the magnetic domains and suppress to deteriorate hysteresis characteristic of magnetic property.

Additionally, the core is formed through laminating the worked silicon steel sheets. The suppressing of the residual strain and stress of the silicon steel sheets may further improve the magnetic property of the core.

The induction machine in accordance with the present embodiment enables to realize the iron loss reduction, high power output, compact configuration and light weight. The magnetic steel sheets used in this induction machine have very good properties free from burrs or the like at the edge portion.

The burrs or the like are one of a plastic deformation layer, and projects sharply on the plane of the sectional portion of the steel sheets along the sectional portion. They may cause the failure of the insulation film formed on the surface of the magnetic steel sheets. Accordingly, there may be a case of making the failure of the insulation between adjacent steel sheets to be laminated.

In laminating such steel sheets, unnecessary gaps may be formed between laminated steel sheets by burrs or the like. It prevents increasing of laminated core density, as a result, the magnetic flux density reduces. The reduction of the magnetic flux density fails to make the induction machine with compact and lightweight.

In order to cope with such burrs or the like, the following method may be adopted: af ter laminating magnetic steel sheets, the core is compressed in a laminating direction thereof to remove burrs or the like, thereby improving the laminated core density. In this case, residual stress increase due to compression, and the resulting increases the iron loss. In addition, there is a problem of insulation failure due residual burrs.

Conversely, according to the present embodiment, the burrs of the core reduces to almost zero, and therefore compressing the laminated steel sheets is not required and it is capable of improving laminated core density, reducing probability of the insulation failure and decreasing of the iron loss.

In the silicon steel sheets used to core as magnetic steel sheets, the content of silicon of 6.5 wt% is theoretically most low in the iron loss. However, increasing of the content of silicon deteriorates considerably rolling workability and punching property. Therefore, even if the iron loss is a little high, considering the rolling workability and punching property, silicon steel sheets with the content of about 3.0 wt% is mainly used.

The silicon steel sheet explained in the present embodiment is able to thin as the thickness of less than 0.3 mm and even if the content of the silicon is less than 2.0 wt%, the iron loss is still low.

In conventional arts, thinned silicon steel sheets manufactured with the thickness of less than 0.3 mm requires special process, such as rolling, annealing or the like. The silicon steel sheets explained by the present embodiment does not require such special process, and the manufacturing cost of the thinned silicon steel sheets may reduces. In relation to the manufacturing the core requires no punching as well as further manufacturing cost.

Incidentally, in a limited special use, instead of the silicon steel sheets that are main material for cores, a very expensive amorphous material is known as a very thin electromagnetic material. The amorphous material is manufactured through a special process that manufactures a foil by condensing molten metal quickly. Therefore, it is able to manufacture very small amount of the sheet with thickness of about 0.05 mm or less and width of less than about 300 mm. However, producing of the material with larger thickness as well as width of the sheet is believed impossible in the industrial scale.

As the amorphous material is hard, brittle and too thin to adopt the punching, it is not available as main core material from view points of limitation of its chemical components and low magnetic flux density.

The magnetic steel sheets in the present embodiment has crystal particles different form such amorphous material.

Also, the magnetic steel sheets of the present embodiment simultaneously realizes thinning effective to low iron loss, strain reduction, high power output, size accuracy improvement effective to compact and light weight and core laminated density improvement effective to make high magnetic flux density, all together

According to the present embodiment, it is possible to provide cores with low iron loss, high power and compact configuration as well as lightweight.

The relationship between the thickness magnetic steel sheet and the iron loss is shown in Fig. 4. Fig. 4 is a view showing a relationship between the thickness and the iron loss that the more the thickness becomes thick, the more the iron loss increases.

The generally used silicon steel sheet thickness is two kinds of 0.50 mm and 0.35mm considering rolling working and punching property on above.

In the silicon steel sheets with two kinds of thickness widely used for manufacturing the core, rolling and annealing are necessary to decrease the iron loss. Additionally, it is necessary for repeating such rolling and annealing to realize further thin steel sheets. However, the number of repetition is varied based on the shape and size of the object core. As explained above, generally used silicon steel sheets requires to realize more thin ones for manufacturing by adding special process, such as rolling and annealing or the like and it results in the high cost manufacturing.

The core explained in the embodiment can reduce its manufacturing loss and solve the problem on the core forming and mass-production in the industrial scale.

The present embodiment uses the silicon steel sheet with thickness of 0.08 to 0.30 mm, preferably silicon steel sheets with thickness of 0.1 to 0.2mm and forms the shape of the core by etching.

Fig. 4 is a view showing a thickness region of amorphous material for reference. The amorphous material requires a special process for condensing quickly molten metal to form a foil, and therefore it is appropriate to manufacture very thin material with thickness of less than about 0.05 mm. The manufacturing of the amorphous sheet with the thickness of larger than the above 0.05mm becomes difficult because of difficulty of the rapid cooling. In addition, only the narrow steel with width of the order of 300 mm may be manufactured. Therefore, in the case of the amorphous material, in addition to requirement of the special manufacturing process, the manufacturing cost becomes very expensive.

Additionally, the amorphous material has a defect in magnetic property that if the iron loss is low, but the magnetic flux density is low. This is the reason why applicable chemical components are limited by their quick condensation.

The present embodiment uses silicon steel sheets having crystal particles, without using such amorphous material.

Next, a typical manufacturing process of the silicon steel sheets is explained. Firstly, a material available for the magnetic steel sheet is manufactured. For example, the used steel sheet material contains 0.005 wt% carbon, 0.2 wt% manganese, 0.02 wt% phosphorus, 0.02 wt% sulfur, 0.03wt% chromium, 0.03wt% aluminum, 2.0 wt% silicon, 0.01wt% copper and a balance iron with inevitable impurities are used.

The silicon steel sheets with the thickness of 0.2mm and width of 50 to 200cm, here, especially the width of 50cm, are manufactured from the material through a continuous casting, hot strip rolling, continuous annealing, acid washing, cold rolling and continuous annealing.

Additionally, 4.5 to 6.5 wt % silicon may be contained on the surface of the each silicon steel sheet to be manufactured to decrease the iron loss. After that, an organic insulation film with thickness 0.1 $\mu$m is coated to manufacture the silicon steel sheet.

Depending on case by case, an oxidized film with thickness of 0.01 to 0.05$\mu$m may be formed on the steel sheet as a work without using specific insulation film coating process.

Additionally, the process of insulation film coating described above preferably is performed in a process of manufacturing cores after etching process. The silicon steel sheet is formed with a desired shape such as a flat plate shape, coil shape or roll shape.

Next, a typical manufacturing process of the core is explained. A pre-treatment is carried out on the silicon steel sheets to be manufactured for the rotor core and stator core respectively to apply a coating of a resist (for example photo-resist) for etching on each silicon steel sheet. Then, the resist is exposed with a mask and developed according to a pattern corresponding to a shape of the rotor core or stator core. The resist is removed according to the pattern of the core's shape.

Then, the next process is carried out using etching fluid. After etching by the etching fluid, a residual photo-resist is removed from the work (the silicon steel sheet), and finally the silicon steel sheet with the pattern of the desired shape of the rotor core and stator core are manufactured. In such manufacturing, for example, a photo etching is available and using a method that forms accurately micro holes using a metal mask is also appropriate.

A plurality of silicon steel sheets, which are formed with desired shape of the stator core and the rotor core, are laminated, and the laminated silicon steel sheets are joined to each other by welding or the like to manufacture the stator core and the rotor core. AS the welding, it is desired to weld with less income heat such as fibre laser or the like.

Since the shapes of the silicon steel sheet of the stator core and the rotor core are formed by using etching, it is possible to manufacture the stator core and the rotor core with very high working accuracy, for example, less than + 1 0pm error, preferably less than $\pm$5$\mu$m error.

When expressing such an error by using roundness, it is desirable to render the error less than 30 $\mu$m, preferably less than 15$\mu$m, and more preferably less than 10$\mu$m. Here, the roundness is defined as a degree of a dimensional error from a geometrical circle to an object circle, and further defined as, on the assumption that the object circle is placed between two coaxial geometric circles, a difference between both radiuses opposite to each other in the object circle in a space where distances between the object circle and the two coaxial geometric circles are shortest.

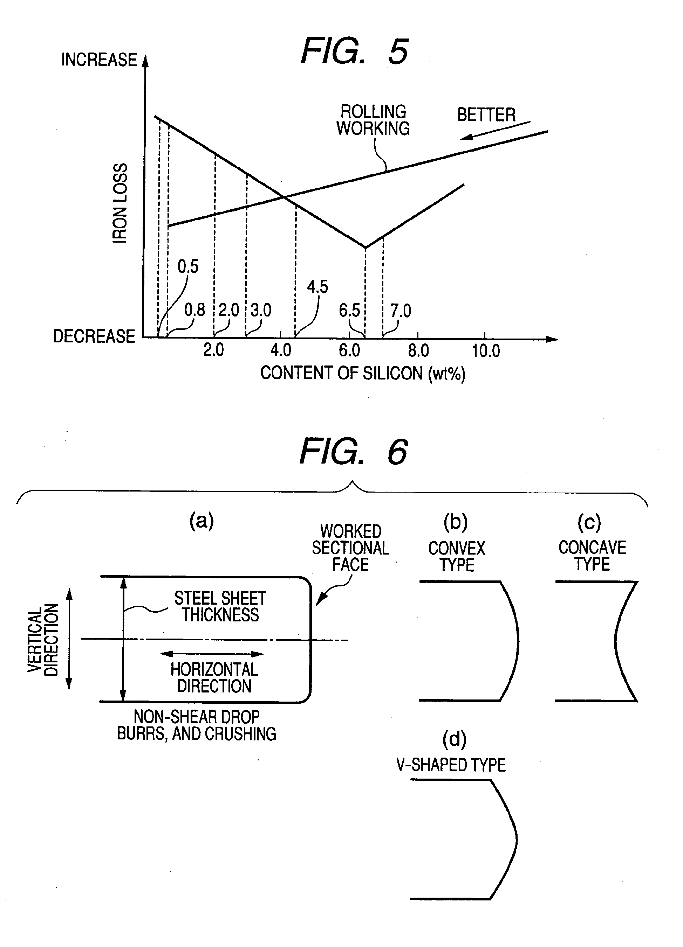

Fig. 5 is a view showing a relationship between content of silicon and the iron loss in the silicon steel sheet. As shown in Fig. 5, the iron loss becomes lowest at content of 6.5 weight % silicon. However, when large amount of silicon, for example, 6.5 wt% of silicon is contained in the silicon steel sheet, its rolling working becomes difficult. Manufacturing of the silicon steel sheet with the desired thickness also becomes difficult. Because the rolling working has a tendency that the more silicon contained in the magnetic steel increase, the more the rolling workability deteriorates. From such background, the silicon steel sheet with 3.0 wt% of silicon is used considering a balance between the iron loss and the rolling workability.

In short, the present embodiment reduces the iron loss of the silicon steel sheet by thinning its thickness and lessening influence of the content of silicon on the iron loss.

Accordingly, the silicon steel sheets in the present embodiment can improve its rolling workability. Further, it can increase the degree of freedom for the content of silicon, which influences on the iron loss, by thinning the thickness. As explained above, the content of silicon in the silicon steel sheets may be within a range of 0.5 to 7.0 wt%, and for example, can use selectively either range of the content of 0.8 to 2.0 wt% and 4.5 to 6.5 wt% whose range are considerable different from each other. The silicon content is used properly depending on the specification of the cores for stator and rotor and use of the induction machine.

Fig. 6 is a view showing a typical worked sectional face of the steel sheet formed by etching.

By etching silicon steel sheets, no plastic deformation layer, such as burrs or the like exist in the vicinity of worked sectional face solved with acid fluid as shown in Fig 6 (a), and the worked sectional face may be formed almost vertically to the horizontal plane direction of the silicon steel sheets.

Additionally, when using a new advanced photo etching, the etching may control the shape of melting portion as shown in Fig. 6(b) to Fig. 6(d). Namely, for example, it is possible to form even a desired taper as well as a hollow and projection perpendicular to the thickness direction.

As explained above, in the silicon steel sheet formed by etching, residual stress due to its working is almost zero and no plasticity deformation layer exist. The plastic deformation value in a direction to the thickness is approximately zero and also, the plasticity deformation value in the vicinity of the worked sectional face by the etching can be almost zero.

In addition, it is capable of controlling the shape of worked section of the silicon steel sheet, and the residual stress by working can be approximately zero. The plasticity deformation in the vicinity of the worked section can be also zero and it is possible to form a sectional shape that the plasticity deformation in the vicinity of the worked section is also zero.

In addition, by using such etching, fine crystal structure and mechanical characteristic of the silicon steel sheet may be applied to the cores under the condition optimizing the surface portion thereof. It is possible to realize optimizing the magnetic property of the cores considering an anisotropy of the crystal structure of the silicon steel sheet and an anisotropy of the magnetic property based on this.

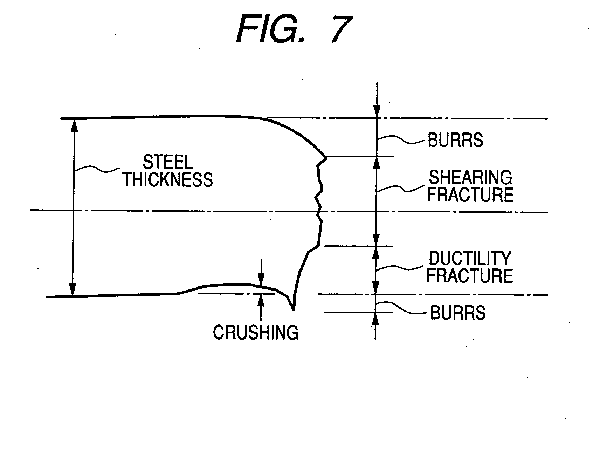

Fig. 7 shows a typical working section by punching.

Provided a method of punching silicon steel sheets is adopted, a portion in the vicinity of the worked section considerably is deformed by shearing stress during a plastic forming and burrs, droops and crashing of 10 to 100$\mu$m are formed.

According to the punching, the accuracy on the plane surface of the silicon steel sheet depends on an accuracy of dimensions. Since the silicon steel is generally sheared while making a gap nearly 5 % to the thickness of the silicon steel sheet, the dimensional accuracy on the silicon steel goes down.

Additionally, the accuracy of the punching goes down with wearing out of a die in the mass-production with lapsed time and so on. Also, the thinner the thickness of the silicon steel, the more the punching becomes difficult. In the case of making conductors and short-circuit rings by the aluminum die casting, if there are burrs, droops and crashing on the steel sheets, aluminum may flow therein, and accordingly may cause the crack of the die casting.

According to the present embodiment, such problem of working accuracy can be solved by using etching and the working accuracy reduction with time lapsed is prevented.

Under photo etching process for manufacturing the magnetic steel sheets, when performing exposures according to a desired pattern corresponding to a shape of the stator core and the rotor core, it is desirable to dispose a mark or reference hole to each magnetic steel sheet relating to the rolling direction of the magnetic steel sheet.

When laminating magnetic steel sheets, unifying the magnetic steel sheets in the rolling direction is needed to improve a characteristic of the induction machine. For example, positions of the marks or reference holes to the rolling direction is varied to each other by a predetermined value, when laminating magnetic steel sheets, provided positions of the marks or reference holes are coincided with each other, the magnetic property of the induction machine can be improved.

The induction machine comprising thin magnetic steel sheets formed by etching method can reduce the iron loss with high accuracy and efficiency.

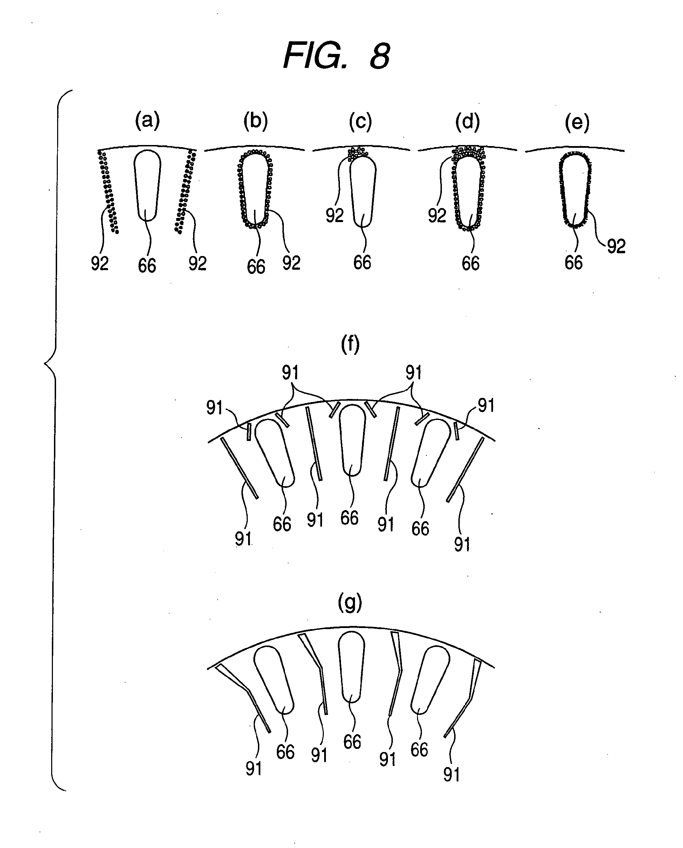

The other embodiments are explained using Figs 8(a)-(g) and Figs. (a)-(b). The same reference numerals used in those embodiments as that of the first embodiment represent the same elements as that of the first embodiment or common elements with that of the first embodiment.

Embodiment 2

Fig. 8(a) is a view showing the second embodiment of the present invention. This drawing is a view showing slits 91 and groups of holes 92 of the second embodiment. Since an arrangement other than that of the slits 91 and the groups of holes 92 is the same as the first embodiment, its explanation is omitted in this embodiment (incidentally the same holds true for the others embodiment described latter). The groups of the holes 92 are disposed in laminated magnetic steel sheets respectively so as not to electrically short-circuit between rotor-conductors 66 through a rotor core 62. The groups of the holes 92 of this embodiment are spaced uniformly in a circumferential direction so as to be placed both sides of respective rotor conductors. Furthermore, while pitches of the holes 92 of each group are even, they may be uneven. For example, the more the holes 92 are close to the outer periphery of the rotor core 62, the more the pitches of them may be narrower.

Additionally, while the width of each group of holes 92 is monospace, it may be not monospace. For example, the more approaching to outer peripheral surface of the rotor core 62, the width may become wider. Further, in the present embodiment, the diameters of the holes 92 are even to each other, however they may be uneven to each other. For example, the more the holes 92 are close to the outer periphery of the rotor core 62, the diameters of the holes 92 may be larger. In addition, the present embodiment adopts the circular holes as the holes 92, however any shapes such as ellipse and rectangular are available.

Embodiment 3

Fig. 8(b) is a view showing the third embodiment of the present invention. The present embodiment structures a rotor core 62 so as not to short-circuit between rotor-conductors 66 by disposing holes 92 of each group around each rotor-conductor 66. In this embodiment, while pitches of the holes 92 of each group are even, they may be uneven. For example, the more the holes 92 are close to the outer periphery of the rotor core 62, the more the pitches of them may be narrower.

Additionally, while the width of each group of holes 92 is set to be monospace, it may be not monospace. For example, the more approaching to outer peripheral surface of the rotor core 62, the width may become wider. Further, in the present embodiment, the diameters of the holes 92 although are even to each other, they may be uneven to each other. For example, the more the holes 92 are close to the outer periphery of the rotor core 62, the diameters of the holes 92 may be larger. In addition, the present embodiment adopts the circular holes as the holes 92, however any shapes such as ellipse and rectangular are available.

Embodiment 4

Fig. 8(c) is a view showing the fourth embodiment of the present invention. In the present embodiment, each group of holes 92 is placed between rotor-conductors 66 and the outer peripheral surface of the rotor 60 so as to decrease the leakage magnetic flux. As shown in the present embodiment, the group of holes 92 although is disposed at a position a little shifted to a circumferential direction with respect to the rotor-conductor 66, even if that is the arrangement, the leakage magnetic flux decreasing effect is expected.

In addition, in the present embodiment, while pitches of the holes 92 of each group are even, they may be uneven. For example, the arrangement of holes 92 may be set so as to be difficult to flow through for the magnetic flux in the circumferential direction but easy in a radial direction. Further, in the present embodiment, the diameters of the holes 92 although are even to each other, they may be uneven to each other. In addition, the present embodiment adopts the circular holes as the holes 92, however any shapes such as ellipse and rectangular are available.

Embodiment 5

Fig. 8(d) is a view showing the fifth embodiment. In the present embodiment, a part of holes 92 of each group is disposed around each rotor-conductor 66 in the rotor core, and another part of holes 92 is placed between the rotor-conductor 66 and the outer peripheral surface of the rotor 60.

According to such an arrangement, it can get both advantages which prevent the rotor-conductor 66 from short-circuiting by a rotor core 62 and decrease the leakage magnetic flux. In the present embodiment, while pitches of the holes 92 of each group are even, they may be uneven. Further while the diameters of the holes 92 are even to each other, they may be uneven to each other.

The shape of the holes 92 is circular on above, however, any shape such as ellipse and rectangular is available.

Embodiment 6

Fig. 8(e) is a view showing the sixth embodiment of the present invention. As is shown, a plurality of slits 91 are disposed around the rotor-conductor 66 in the rotor core so as not to short-circuit between rotor-conductors 66 through a rotor core 62. In order to prevent aluminum from flowing into the slits 91 when manufacturing the rotor-conductor 66 by an aluminum die casting method, the slits 91 are designed so that the widths thereof are decreased. Thereby, it is possible to lessen the contact surface between the rotor-conductors 66 and rotor core 62, and an effect is expected that the rotor core 62 does not short-circuit electrically the rotor-conductor 66.

Embodiment 7

Fig. 8(f) is a view showing the seventh embodiment of the present invention. As shown in the present embodiment, it is able to suppress electrically short-circuiting between rotor-conductors 66 through a rotor core 62 without extending the slit 91 up to the outer surface portion of the rotor core 62. A plurality of slits 91 disposed in rotor teeth 67 are able to improve the efficiency by reducing the surface loss based on the reason explained in the embodiment 1. Also, as in the present embodiment, varying the length of the slit 91 or inclining the slit 91 is available, too.

Embodiment 8

Fig. 8(g) is a view showing the eighth embodiment of the present invention. Even if the slits 91 are not straight shape and the width of the slits 91 are not monospace, the effect for preventing the rotor-conductors 66 from being electrically short-circuiting by the rotor core 62 is expected.

Embodiment 9

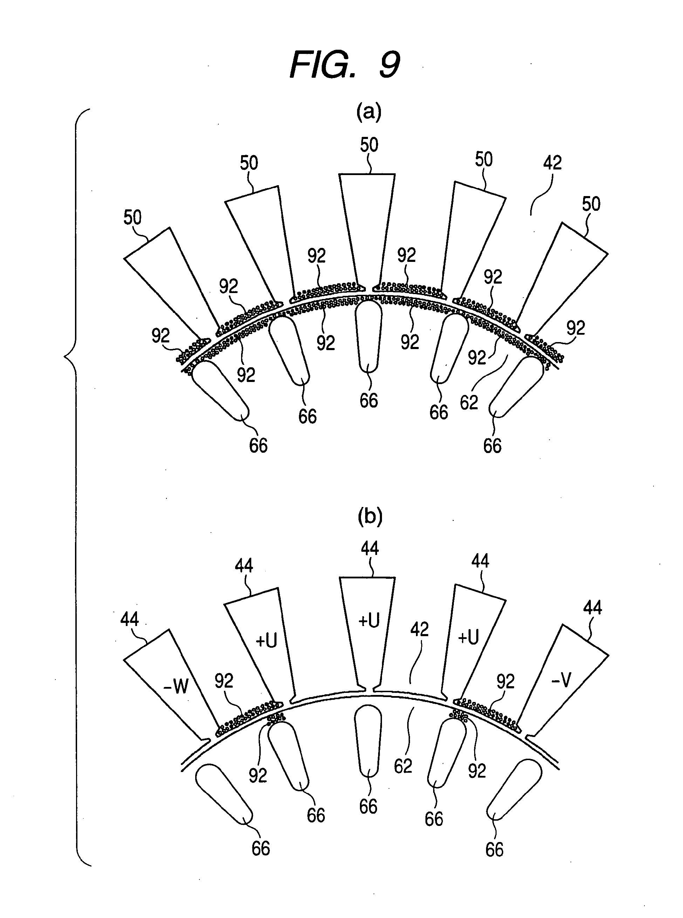

Fig. 9(a) is a view showing the ninth embodiment of the present invention. Fig. 9(a) shows the other arrangement of groups of holes 92. As shown in the present embodiment, one of the groups of holes 92 is arranged in a stator core 42 so that a plurality of holes 92 are disposed in the vicinity of an inner peripheral surface of the stator core 42. Another group of the holes 92 is arranged in a rotor core 62 disposed in the vicinity of the outer periphery of the rotor core 62. Such an arrangement enables to decrease surface loss occurred both in the stator core 42 and the rotor core 62.
In stead of the arrangement, even if the holes 92 are disposed only on the stator core 42 or rotor core 62, the effect of the surface loss reduction is expected. On the other hand, even if a plurality of slits 91 are disposed in the vicinity of the inner surface of the stator core 42 and the outer surface of the rotor core 62, surface loss occurred in the stator core 42 and rotor core 62 may be decreased. The effect of surface loss reduction is expected even if proposing the slits 91 at only the stator core 42 or the rotor core 62.

Embodiment 10

Fig. 9(b) is a view showing the 10th embodiment of the present invention. In the present embodiment, groups of holes 92 of a stator core 42 are disposed at positions where the phase of the stator winding 44 changes. The magnetic flux density becomes high at positions where the phase of a stator winding 44 in the stator core 42. It becomes to a pulsation and surface loss occurred in the rotor core 62. According to the present embodiments, as the groups of the holes 92 is disposed at positions where phase of the stator winding 44 changes, it can prevent the pulsation wave at the positions where the phase of the stator winding 44 changes and suppress increase of the magnetic flux density.
In the present embodiment, the groups of the holes 92 are arranged in the vicinity of an inner surface of the stator core 42, the effect, however, is expected when it is placed only at positions where the phase of the stator winding 44 changes and suppresses phenomenon of increasing the magnetic flux density to reduce pulsation. In the present embodiment, groups of holes 92 of a rotor core 62 decreases the leakage magnetic flux. As the present embodiment, even if the group of the holes 92 is not arranged to whole rotor-conductors, decreasing of leakage magnetic flux is expected.
A typical embodiment in accordance with the present invention enables to provide an induction machine capable of decreasing iron loss and realizing high efficiency.
As described above, the slit 91 and the group of the holes 92 are disposed so as to reduce current flowing through both of the stator core 42 and rotor core 62 or either the stator core 42 or the rotor core 62. Accordingly, the iron loss will be decreased and a high efficiency induction machine can be supplied. Also, the slit 91 and the group of the holes 92 are disposed so as to reduce leakage magnetic flux in the stator core 42 and rotor core 62, or either the stator core 42 or the rotor core 62. As a result, it may provide a high efficiency induction machine.

**Claims**

**1.** An induction machine comprising:

a stator including a stator core with teeth and slots, and stator windings placed in the slots; and
a rotor including a rotor core with teeth and slots, and rotor-conductors placed in the slots;
wherein said stator core and said rotor core are made of laminated steel sheets and the steel sheets are formed by etching.

**2.** An induction machine according to claim 1, wherein each of the steel sheets has 0.05 to 0.30 mm thickness.

**4.** An induction machine according to claim 1, wherein the steel sheets are silicon steel sheets.

**5.** An induction machine according to claim 1, wherein the steel sheets contain crystal particles.

**6.** An induction machine according to claim 1, wherein said stator core and rotor core include an insulation film with thickness of 0.1 to $0.2\mu m$ interposed between the laminated steel sheets.

**7.** An induction machine according to claim 1, wherein said stator core and rotor core have an insulation film with thickness of 0.01 to $0.05\mu m$ interposed between the laminated steel sheets.

**8.** An induction machine according to claim 7, wherein the insulation film is oxide film.

**9.** An induction machine according to claim 4, wherein the silicon concentration of the surface portion of the silicon steel sheets is higher than that of the inside.

**10.** An induction machine according to claim 1, wherein the laminated core density of the steel sheets is 90.0 to 99.9%.

**11.** An induction machine according to claim 1, wherein the etching is comprised of coating resist on the steel sheets, exposing and developing shapes of said stator core and rotor core, removing the resist based on the shape, working by etching fluid, and removing the residue resist after working by the etching fluid.

**12.** An induction machine according to claim 1, wherein said stator core or rotor core have a group of holes with a diameter smaller than the steel sheet thickness or slits with a width smaller than that of each of the steel sheets.

**13.** An induction machine according to claim 12, wherein the group of holes is disposed at a position where the phase of said stator windings changes.

**14.** An induction machine according to claim 1, wherein the group of holes or slits is disposed on said rotor core so as to cover the periphery of said rotor-conductor.

**15.** An induction machine according to claim 14, wherein the slits are disposed between the rotor-conductors.

**16.** An induction machine according to claim 15, wherein the width of the slits is irregular.

**17.** A method for making a stator core and a rotor core of an induction machine comprising:

a stator including a stator core with teeth and slots, and stator windings placed in the slots; and
a rotor including a rotor core with teeth and slots, and rotor-conductors placed in the slots;
said stator core and said rotor core comprising laminated steel sheets,
wherein the steel sheets are formed by etching.

**18.** The method according to claim 17, wherein the etching is comprised of coating resist on the steel sheets, exposing and developing shapes of said stator core and rotor core, removing the resist based on the shape, working by etching fluid, and removing the residue resist after working by the etching fluid.

**19.** The method according to claim 17 or 19, wherein the steel sheets are magnetic steel sheets containing 0.001 to 0.060 wt% carbon, 0.1 to 0.6 wt% manganese, less than 0.03wt% phosphorus, less than 0.03 wt% sulfur, less than 0.1 wt% chromium, less than 0.8 wt% aluminum, 0.5 to 7.0 wt% silicon and, 0.01 to 0.20 wt% copper with a balance being iron and inevitable impurities.

**20.** An induction machine comprising:

a stator including a stator core with teeth and slots, and a stator winding disposed in the slots; and
a rotor including a rotor core with teeth and slots, and rotor-conductors disposed in the slots,
wherein a group of holes or slits are arranged on said rotor core so as to cover the outer periphery of said rotor-conductors.

# FIG. 1

# FIG. 2

## FIG. 3

## FIG. 4

## FIG. 5

INCREASE

IRON LOSS

DECREASE

ROLLING
WORKING

BETTER

0.5
0.8  2.0  3.0
4.5
6.5  7.0

2.0    4.0    6.0    8.0    10.0
CONTENT OF SILICON (wt%)

## FIG. 6

(a)

WORKED
SECTIONAL
FACE

(b)
CONVEX
TYPE

(c)
CONCAVE
TYPE

VERTICAL
DIRECTION

STEEL SHEET
THICKNESS

HORIZONTAL
DIRECTION

NON-SHEAR DROP
BURRS, AND CRUSHING

(d)
V-SHAPED TYPE

# FIG. 7

STEEL
THICKNESS

BURRS

SHEARING
FRACTURE

DUCTILITY
FRACTURE

BURRS

CRUSHING

# FIG. 8

(a)  (b)  (c)  (d)  (e)

(f)

(g)

# FIG. 9

(a)

(b)

## REFERENCES CITED IN THE DESCRIPTION

### Patent documents cited in the description

- JP SHO5526040 B
- JP SHO5683252 B
- JP HEI03207228 B
- JP SHO5398011 B